# FASCICULE DE BREVET EUROPEEN

(11) **EP 3 069 682 B1**
(45) Date de publication et mention de la délivrance du brevet: **11.12.2019**
(21) Numéro de dépôt: 16160756.9
(22) Date de dépôt: 16.03.2016
(51) Int. Cl.: A61C 1/08, F16B 41/00, F16B 39/24, A61C 8/00

(54) **ENSEMBLE COMPORTANT UNE PIECE ET UN DISPOSITIF DE BUTEE AXIALE DESTINE A ETRE RAPPORTE DANS UN ALESAGE DE LADITE PIECE**
ANORDNUNG, DIE EIN WERKSTÜCK UND EINE AXIALE ANSCHLAGVORRICHTUNG UMFASST, ZUM ANBRINGEN IN EINE AUSBOHRUNG DIESES WERKSTÜCKS
ASSEMBLY COMPRISING A COMPONENT AND AN AXIAL LIMIT STOP DEVICE INTENDED TO BE PLACED IN A BORE OF SAID COMPONENT

(30) Priorité: 17.03.2015 FR 1552206; 03.07.2015 FR 1556332
(43) Date de publication de la demande: 21.09.2016
(73) Titulaire: ANTHOGYR, 74700 Sallanches (FR)
(72) Inventeur: Richard, Hervé, 73590 Notre Dame de Bellecombe (FR)
(74) Mandataire: Cabinet Poncet

(56) Documents cités:
- EP-A1- 2 607 722
- EP-B1- 0 801 544
- WO-A2-2012/037014
- US-A- 5 322 443

## Description

La présente invention concerne un ensemble comportant une pièce et un dispositif de butée axiale destiné à être rapporté dans un alésage de ladite pièce pour y retenir un élément. L'invention a notamment pour domaine d'application le domaine dentaire, pour retenir une vis de transfixation dans un alésage d'une prothèse dentaire destinée à être rapportée sur un implant dentaire. Du document EP 0 801 544 B1, on connaît un pilier dentaire destiné à être rapporté et fixé sur un implant dentaire, lui-même destiné à être inséré dans l'os maxillaire ou mandibulaire d'un patient. Le pilier dentaire reçoit ultérieurement en appui une prothèse dentaire finale céramique ou métallique. Le pilier dentaire comporte un alésage traversant dans lequel est prévu un dispositif de butée axiale destiné à assurer la retenue axiale d'une vis captive dans l'alésage du pilier. Le tronçon de tige fileté de la vis est destiné à être reçu par vissage dans un alésage fileté intérieurement de l'implant dentaire. Le pilier dentaire est fixé à l'implant dentaire par l'intermédiaire de moyens de fixation (une vis en l'espèce) traversant le pilier dentaire, d'où l'expression de « pilier dentaire transfixé », et plus généralement de « pièce transfixée ». Le dispositif de butée axiale comporte une bague fendue radialement venant simultanément en prise sous la tête de vis et dans une gorge annulaire ménagée dans l'alésage traversant du pilier.

Dans le cas où un couple excessif de vissage est communiqué à la vis, celle-ci peut être endommagée, notamment en se rompant au niveau de sa tige. Il est alors souhaitable de retirer ce qui reste de la vis dans l'alésage traversant du pilier afin de pouvoir y insérer une nouvelle vis. Toutefois, la bague fendue du document EP 0 801 544 B1 est malheureusement très difficilement démontable, voire indémontable, en grande partie du fait des très petites dimensions des pièces concernées (pilier dentaire et bague fendue). Ainsi, toute détérioration de la vis rend le pilier dentaire inutilisable. Le praticien est alors obligé de recourir à un nouveau pilier dentaire muni d'une vis intacte.

Le fait de recourir à un nouveau pilier dentaire n'est en soi pas trop gênant dans la mesure où il s'agit d'une pièce dont la forme n'est pas adaptée à chaque patient et dont le praticien a plusieurs exemplaires. Un échange standard rapide est ainsi possible.

Depuis de nombreuses années, on cherche à limiter le nombre de pièces en se passant de piliers dentaires pour rapporter et fixer une prothèse dentaire finale sur un implant dentaire inséré dans l'os maxillaire ou mandibulaire d'un patient. Pour ce faire, il a été envisagé d'insérer la vis de façon captive directement dans un alésage ménagé dans la prothèse dentaire finale. La vis de fixation peut être entraînée en rotation au moyen d'un outil de vissage accédant à la tête de vis par le biais d'un puit d'accès communiquant avec l'alésage (le plus souvent sécant de façon oblique avec l'alésage) dans lequel est retenue la vis. Ces prothèses dentaires sont souvent appelées « prothèses dentaire transvissées » ou « prothèses dentaire transfixées » car l'outil de vissage et la vis les traversent de part et part lors de leur fixation. Mais en cas de détérioration de la vis, de la même façon que ce qui a été expliqué pour le pilier dentaire, ce qui reste de la vis ne peut également pas être retiré de l'alésage. La détérioration de la vis rend ainsi la prothèse finale inutilisable. Or, la forme extérieure de la prothèse finale est façonnée de façon unique pour chaque patient au moyen d'un procédé souvent long et onéreux. Le praticien est alors obligé de fabriquer une nouvelle prothèse dentaire finale, ce qui prend beaucoup de temps et coûte cher.

Ce problème est encore plus critique dans les prothèses dentaires plurales transfixées, qui sont destinées à être reçues sur une pluralité d'implants dentaires et comportent pour cela une pluralité de vis captives : la détérioration d'une seule des vis peut rendre toute la prothèse inutilisable.

Le document WO 2012/037014 A2 décrit une bague annulaire à symétrie de révolution autour d'un axe central, comprenant deux tronçons angulaires en arc à extrémités libres respectives déplaçables radialement dans un plan transversal perpendiculaire à l'axe central entre une position de retrait et au moins une position de saillie, en étant en permanence élastiquement rappelés en position de saillie. Cette bague annulaire est utilisée pour former un écrou de fixation à rochet en étant rapportée dans l'alésage d'une rondelle. Lorsque la bague annulaire est reçue dans l'alésage de la rondelle, des languettes optionnelles rapportées par soudure permettent de retenir définitivement la bague annulaire assemblée dans la rondelle. Pour ce faire, les languettes sont en permanence en appui sous la bague annulaire et s'opposent à une extraction de la bague hors de la rondelle par translation, et ce quelle que soit la position en rotation de la bague annulaire par rapport à la rondelle.

Le document EP 1 060 716 A2 décrit un écrou de fixation compressible axialement utilisé dans un implant orthopédique de type tige fémorale prothétique.

Un problème proposé par la présente invention est de concevoir un ensemble comportant une pièce et un dispositif de butée axiale destiné à être rapporté dans un alésage de ladite pièce pour y retenir de façon fiable un élément, le dispositif de butée axiale pouvant néanmoins être démonté aisément pour permettre le retrait de l'élément dans le cas où celui-ci viendrait à être endommagé.

Selon un autre aspect, la présente invention vise à concevoir un ensemble comprenant une pièce et un dispositif de butée axiale adapté pour être monté de façon amovible dans un alésage de ladite pièce, ladite pièce ayant de très faibles dimensions, comme dans le cas d'une prothèse dentaire notamment.

Pour atteindre ces objets ainsi que d'autres, l'invention propose un ensemble selon la revendication 1.

Lorsque ledit au moins un tronçon angulaire du dispositif de butée axiale est en position de retrait, le dispositif de butée axiale peut être inséré par un simple mouvement de translation axiale, selon le premier axe longitudinal et en direction de l'extrémité distale d'alésage de pièce, dans le premier tronçon d'alésage de pièce. Puis, en enfonçant un peu plus le dispositif de butée axiale dans l'alésage de pièce en direction de l'extrémité distale d'alésage de pièce, ledit au moins un tronçon angulaire peut pénétrer dans le deuxième tronçon d'alésage de pièce et venir en correspondance du logement de retenue du deuxième tronçon d'alésage de pièce pour s'y engager en position de saillie par rappel élastique. Si on cherche à extraire le dispositif de butée axiale hors de l'alésage, par un mouvement de translation axiale selon le premier axe longitudinal et en direction de l'orifice d'entrée de l'alésage de pièce, ledit au moins un tronçon angulaire vient en appui contre la face proximale de retenue du logement de retenue et s'oppose à cette extraction. Le dispositif de butée axiale est ainsi apte à retenir captif un élément (tel qu'une vis à tête) dans l'alésage.

Dans le cas où l'élément retenu dans l'alésage est endommagé et doit être retiré de la pièce, on peut malgré tout extraire le dispositif de butée axiale hors de l'alésage. Pour ce faire, on fait tourner le dispositif de butée axiale autour du premier axe longitudinal d'alésage de façon à faire porter ledit au moins un tronçon angulaire contre la portion angulaire de surface latérale du deuxième tronçon d'alésage de pièce qui s'étend dans le prolongement de la surface latérale cylindrique du premier tronçon d'alésage de pièce. Ledit au moins un tronçon angulaire est ainsi ramené en position de retrait, de sorte que le dispositif de butée axiale peut alors être extrait hors de l'alésage de pièce, à travers le premier tronçon d'alésage de pièce, par un simple mouvement de translation axiale selon le premier axe longitudinal et en direction de l'orifice d'entrée de l'alésage de pièce.

Avantageusement, ledit au moins un tronçon angulaire peut être tenu à l'écart de l'extrémité distale de la bague annulaire, selon l'axe central, par une entretoise s'étendant parallèlement à l'axe central. Le rappel élastique du tronçon angulaire en position de saillie n'est ainsi pas perturbé par un frottement du tronçon angulaire contre l'extrémité distale de la bague annulaire.

De préférence, perpendiculairement à l'axe central, ledit au moins un tronçon angulaire peut comporter une épaisseur qui décroît depuis sa première extrémité vers sa deuxième extrémité libre. On limite ainsi efficacement les contraintes induites au niveau de la liaison entre l'entretoise et le tronçon angulaire par une flexion du tronçon angulaire ramenant ce dernier en position de retrait. Si ces contraintes étaient trop élevées, elles pourraient venir briser le bras et/ou le tronçon angulaire au voisinage de leur liaison, surtout dans le cas d'un dispositif de butée axiale de faibles dimensions.

Avantageusement, une empreinte, permettant d'entraîner en rotation la bague annulaire autour de l'axe central, peut être ménagée dans une face d'extrémité proximale de la bague annulaire. L'extrémité proximale de la bague annulaire est en effet la partie du dispositif de butée axiale la plus facilement accessible depuis l'extérieur de la pièce.

De préférence, l'empreinte peut comporter deux encoches diamétralement opposées. Une empreinte présentant une symétrie permet de plus facilement faire tourner le dispositif de butée axiale autour de son axe central.

Avantageusement, le dispositif de butée axiale peut comporter deux tronçons angulaires déplaçables dans un même plan transversal.

Dans le cas d'une pluralité de tronçons angulaires, on peut de préférence prévoir que :
- le deuxième tronçon d'alésage de pièce comporte une pluralité de logements de retenue,
- chaque logement de retenue est séparé du logement de retenue adjacent par une portion angulaire de la surface latérale de deuxième tronçon d'alésage de pièce qui s'étend dans le prolongement de la surface latérale cylindrique du premier tronçon d'alésage de pièce.

Le fait d'avoir plus d'un tronçon angulaire engagés respectivement dans des logements de retenue permet de mieux retenir axialement le dispositif de butée axiale dans la pièce.

Les portions angulaires de la surface latérale de deuxième tronçon d'alésage de pièce, qui s'étendent dans le prolongement de la surface latérale cylindrique du premier tronçon d'alésage de pièce et qui séparent les logements de retenue adjacents, permettent de ramener simultanément tous les tronçons angulaires en position de retrait lorsque le dispositif de butée axiale est entraîné en rotation autour de l'axe central.

L'élément destiné à être rapporté dans l'alésage de la pièce à l'aide du dispositif de butée axiale, peut avantageusement comporter :
- un tronçon proximal d'élément ayant une section transversale de dimensions inférieures ou égales au diamètre intérieur de la bague annulaire,
- un tronçon distal d'élément à section transversale ayant au moins une dimension supérieure au diamètre intérieur de la bague annulaire mais inférieure ou égale au diamètre du premier tronçon d'alésage de pièce,
- un épaulement reliant les tronçons proximal et distal d'élément.

Le tronçon proximal d'élément peut ainsi passer à travers le dispositif de butée axiale pour faire saillie hors de l'alésage de la pièce tandis que le tronçon distal d'élément est en appui axial selon l'épaulement contre le dispositif de butée axiale pour être retenu dans l'alésage de la pièce.

De préférence, l'élément destiné à être rapporté dans l'alésage cylindrique de la pièce peut être une vis dont la tête constitue le tronçon distal d'élément et dont la tige filetée constitue le tronçon proximal d'élément.

Pour faciliter l'assemblage de l'ensemble selon l'invention par insertion du dispositif de butée axiale dans l'alésage de la pièce, on peut avoir recours à un outillage de montage dans lequel on peut de préférence prévoir que :
- un manchon tubulaire à alésage central s'étend selon un deuxième axe longitudinal entre un orifice distal et un orifice proximal,
- l'alésage central de manchon tubulaire comporte un tronçon distal d'alésage de manchon tubulaire, s'étendant depuis l'orifice distal, un tronçon intermédiaire d'alésage de manchon tubulaire faisant suite au tronçon distal d'alésage de manchon tubulaire et s'étendant vers l'orifice proximal, et un tronçon proximal d'alésage de manchon tubulaire faisant suite au tronçon intermédiaire d'alésage de manchon tubulaire et s'étendant jusqu'à l'orifice proximal,
- le tronçon intermédiaire d'alésage de manchon tubulaire comporte une section transversale circulaire de diamètre égal ou peu supérieur au diamètre extérieur de la bague annulaire,
- le tronçon distal d'alésage de manchon tubulaire comporte au moins un logement de retenue qui s'étend radialement par rapport au deuxième axe longitudinal hors du volume du cylindre prolongeant la surface cylindrique du tronçon intermédiaire d'alésage de manchon tubulaire, ledit logement de retenue étant apte à recevoir ledit au moins un tronçon angulaire de dispositif de butée axiale en position de saillie,
- le logement de retenue comporte une face proximale de retenue s'étendant selon un plan transversal sensiblement perpendiculaire au deuxième axe longitudinal et se raccordant à la paroi latérale cylindrique du tronçon intermédiaire d'alésage de manchon tubulaire,
- le tronçon distal d'alésage de manchon tubulaire comporte au moins une portion angulaire de surface latérale s'étendant dans le prolongement de la surface latérale cylindrique du tronçon d'alésage intermédiaire de manchon tubulaire.

Un tel outillage de montage s'avère particulièrement utile lorsque le dispositif de butée axiale présente de très faibles dimensions, comme c'est notamment le cas lorsqu'il est utilisé pour retenir un élément tel qu'une vis dans une prothèse dentaire.

Pour insérer le dispositif de butée axiale dans l'alésage de la pièce, celui-ci est tout d'abord inséré dans le tronçon distal d'alésage de manchon tubulaire. Ledit au moins un tronçon angulaire, alors en position de saillie, est engagé dans ledit au moins un logement de retenue prévu dans le tronçon distal d'alésage de manchon tubulaire. En faisant tourner le dispositif de butée axiale autour de l'axe central, on amène ensuite ledit au moins un tronçon angulaire en correspondance de ladite au moins une portion angulaire de surface latérale s'étendant dans le prolongement de la surface latérale cylindrique du tronçon d'alésage proximal de manchon tubulaire. Le tronçon angulaire est ainsi ramené en position de retrait. L'orifice distal du manchon tubulaire est alors amené à proximité immédiate de l'orifice d'entrée d'alésage de pièce. Le dispositif de butée axiale, avec son tronçon angulaire en position de retrait, est ensuite poussé hors du tronçon distal d'alésage de manchon tubulaire pour être engagé dans le premier tronçon d'alésage de pièce jusqu'à ce que le tronçon angulaire du dispositif de butée axiale pénètre dans le deuxième tronçon d'alésage de pièce et vienne en correspondance du logement de retenue du deuxième tronçon d'alésage de pièce pour s'y engager en position de saillie par rappel élastique.

Pour pousser le dispositif de butée axiale hors du tronçon distal d'alésage de manchon tubulaire, on peut faire pénétrer un arbre longitudinal à travers le manchon tubulaire depuis son orifice proximal.

L'élément destiné à être retenu dans l'alésage de pièce peut être préalablement engagé dans l'alésage de pièce avant que n'y soit engagé le dispositif de butée axiale. En alternative, l'élément destiné à être retenu dans l'alésage de pièce peut être introduit dans l'alésage de pièce en même temps que le dispositif de butée axiale.

De préférence, on peut prévoir que :
- l'outillage de montage comporte un arbre longitudinal s'étendant selon un troisième axe longitudinal, à tronçon distal ayant une section transversale extérieure circulaire de diamètre sensiblement égal au diamètre du tronçon intermédiaire d'alésage de manchon tubulaire,
- le tronçon distal d'arbre longitudinal s'étend selon le troisième axe longitudinal selon une longueur supérieure au cumul des longueurs des tronçon intermédiaire d'alésage de manchon tubulaire et tronçon distal d'alésage de manchon tubulaire selon le deuxième axe longitudinal,
- le tronçon distal d'arbre longitudinal comporte, à une extrémité libre, une face distale destinée à venir porter contre l'extrémité proximale de la bague annulaire,
- la face distale du tronçon distal d'arbre longitudinal comporte des reliefs aptes à coopérer avec l'empreinte ménagée dans la face d'extrémité proximale de la bague annulaire pour entraîner en rotation la bague annulaire autour de son axe central.

L'arbre longitudinal sert ainsi simultanément :
- à pousser le dispositif de butée axiale hors du tronçon distal d'alésage de manchon tubulaire pour engager le dispositif de butée axiale dans le premier tronçon d'alésage de pièce,
- à faire tourner le dispositif de butée axiale autour de l'axe central dans le tronçon distal d'alésage de manchon tubulaire pour ramener le tronçon angulaire en position de retrait.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un exemple de dispositif de butée axiale destiné à être utilisé dans un mode de réalisation particulier d'ensemble selon l'invention ;
- la figure 2 est une autre vue en perspective du dispositif de butée axiale de la figure 1, prise selon une direction différente de celle de la figure 1 ;
- la figure 3 est une vue de dessous du dispositif de butée axiale de la figure 1 ;
- la figure 4 est une vue de dessus du dispositif de butée axiale de la figure 1 ;
- la figure 5 est vue de dessous et en coupe du dispositif de butée axiale de la figure 1 ;
- la figure 6 est une vue en perspective d'une pièce de type prothèse dentaire plurale transfixée, portée par une pluralité d'implants dentaires ;
- la figure 7 est une vue de dessus de la prothèse dentaire plurale transfixée de la figure 6 ;
- la figure 8 est une vue de détail et en coupe selon un plan de coupe A-A d'un mode de réalisation particulier d'ensemble selon l'invention, comprenant la pièce de la figure 6, de type prothèse dentaire plurale transfixée, dans un alésage de laquelle est retenu un élément par le dispositif de butée axiale de la figure 1 ;
- la figure 9 est une autre vue de détail et en coupe de l'ensemble de la figure 8, sur une première variante d'implant dentaire, prise selon un plan de coupe B-B perpendiculaire au plan de coupe A-A de la figure 8 ;
- la figure 10 est une vue de détail et en coupe de l'alésage de la pièce de la figure 6, de type prothèse dentaire plurale transfixée, prise selon un plan de coupe C-C perpendiculaire aux plans de coupe A-A et B-B des figures 8 et 9 ;
- la figure 11 est une vue de côté et en coupe de l'élément retenu dans l'alésage de la pièce, de type prothèse dentaire plurale transfixée, sur les figures 8 et 9 ;
- la figure 12 est une vue de côté de l'élément de la figure 11 ;
- la figure 13 est une vue en perspective de l'élément de la figure 11 ;
- la figure 14 est une vue en coupe d'un manchon tubulaire d'un outillage de montage ;
- la figure 15 est une vue de l'extrémité distale du manchon tubulaire de la figure 14 ;
- la figure 16 est une vue de côté du manchon tubulaire de la figure 14, d'un dispositif de butée axiale de la figure 1 et d'un arbre longitudinal de l'outillage de montage ;
- la figure 17 est une autre vue de côté des éléments de la figure 16, prise selon une direction perpendiculaire à celle de la figure 16 ;
- les figures 18 et 19 sont des vues de détail de côté et en coupe illustrant la coopération des éléments de la figure 16 ;
- les figures 20 et 21 sont des vues en perspectives illustrant l'utilisation du manchon tubulaire de la figure 14 et de l'arbre longitudinal de la figure 16 pour installer un dispositif de butée axiale de la figure 1 dans un alésage de la pièce de la figure 6, de type prothèse dentaire plurale transfixée ; et
- la figure 22 est une autre vue de détail et en coupe de l'ensemble de la figure 8, sur une deuxième variante d'implant dentaire, prise selon un plan de coupe B-B perpendiculaire au plan de coupe A-A de la figure 8.

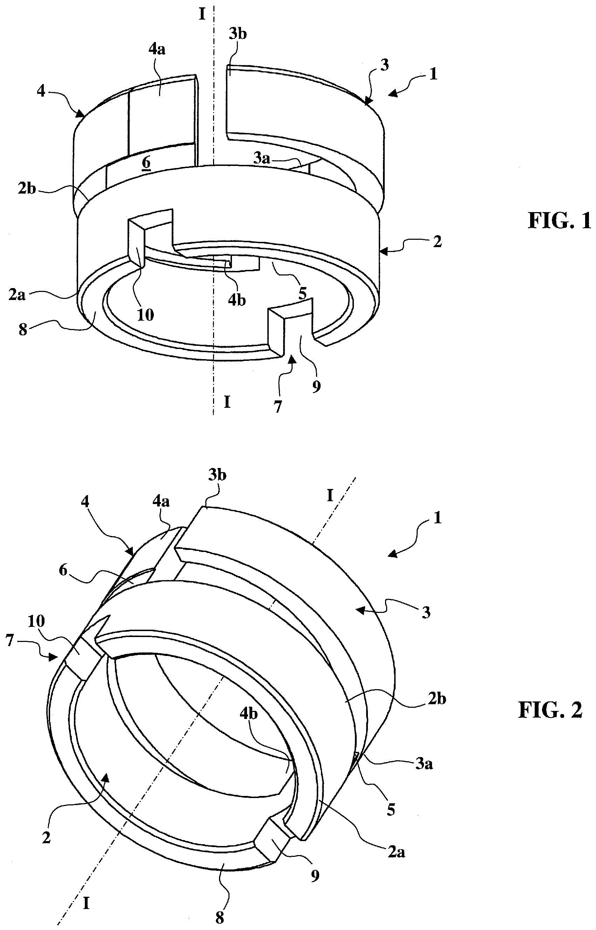

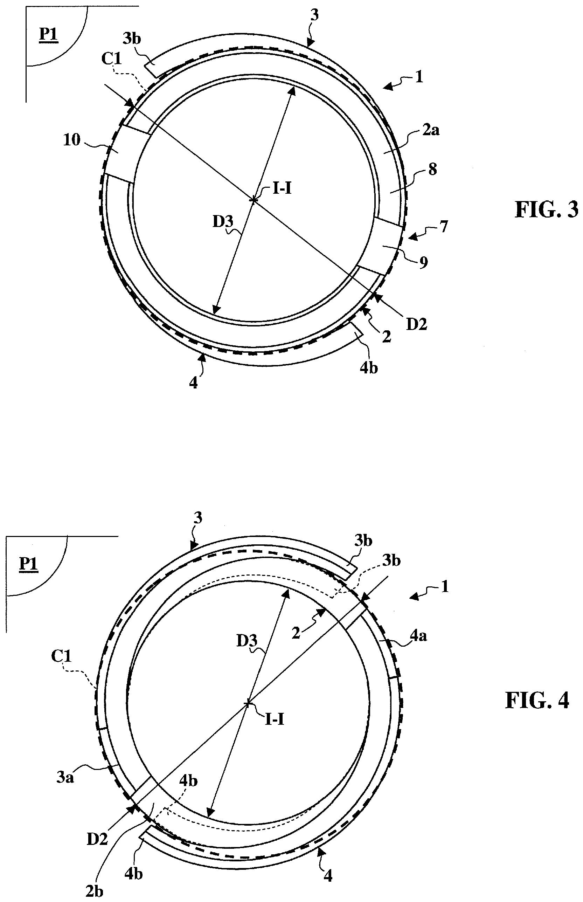

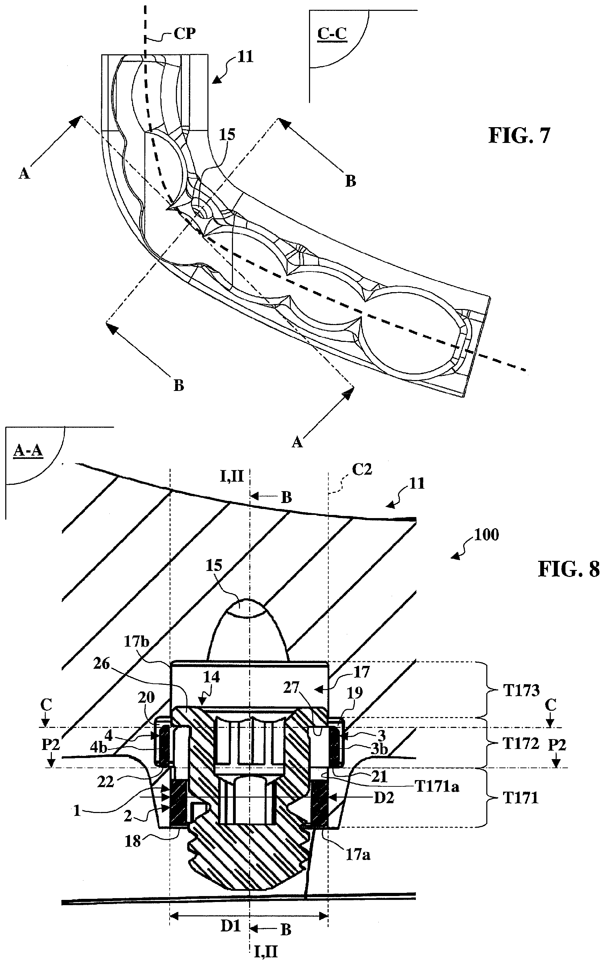

Sur les figures 1 à 5 est illustré un exemple de dispositif de butée axiale 1 destiné à la fabrication d'un mode de réalisation particulier d'ensemble 100 selon l'invention (ledit ensemble 100 est plus particulièrement visible sur les figures 8, 9 et 22). Le dispositif de butée axiale 1 est monobloc et comprend une bague annulaire 2 à symétrie de révolution autour d'un axe central I-I, et s'étendant selon l'axe central I-I entre une extrémité proximale 2a et une extrémité distale 2b. Deux tronçons angulaires 3 et 4 se développent en arc entre des premières extrémités 3a et 4a reliées à l'extrémité distale 2b de la bague annulaire 2 et une deuxième extrémité libre 3b et 4b. Les tronçons angulaires 3 et 4 sont en partie déplaçables radialement par déformation à partir de leurs premières extrémités 3a et 4a dans un même plan P1 transversal perpendiculaire à l'axe central I-I entre une position de retrait (illustrée en traits discontinus sur la figure 4) et au moins une position de saillie (illustrée en trait plein sur les figures 1 à 5), en étant en permanence élastiquement rappelés en position de saillie.

Comme illustré sur la figure 4 en traits discontinus, en position de retrait, les tronçons angulaires 3 et 4 sont compris dans le volume d'un cylindre C1 prolongeant la surface cylindrique extérieure de la bague annulaire 2. En position de saillie, les extrémités libres 3b et 4b des tronçons angulaires 3 et 4 dépassent au-delà du volume du cylindre C1 prolongeant la surface cylindrique extérieure de la bague annulaire 2.

On voit plus particulièrement sur les figures 1 et 2 que les premières extrémités 3a et 4a des tronçons angulaires 3 et 4 et l'extrémité distale 2b de la bague annulaire 2 sont reliés par des entretoises 5 et 6 s'étendant parallèlement à l'axe central I-I. Les tronçons angulaires 3 et 4 sont ainsi tenus à l'écart de l'extrémité distale 2b de la bague annulaire 2 selon l'axe central I-I.

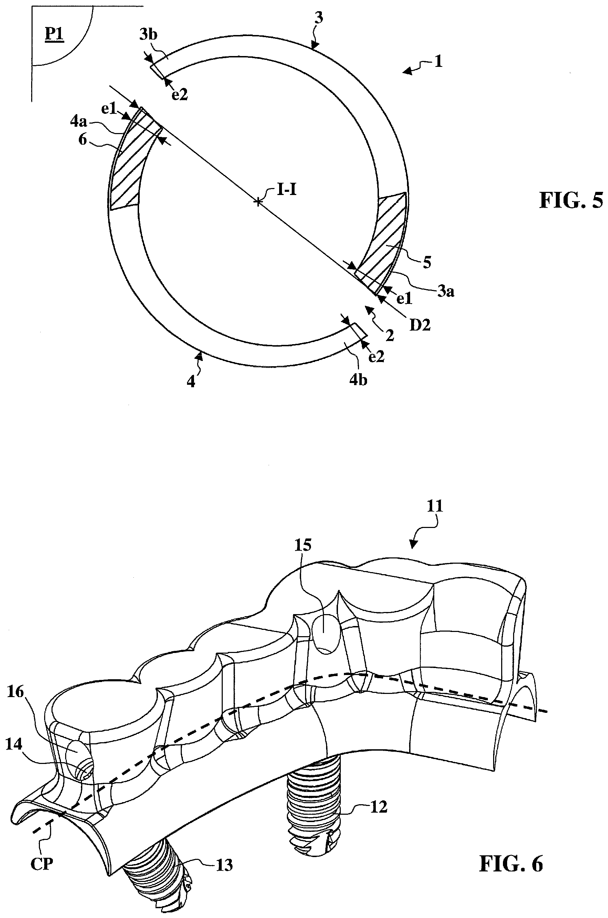

On voit plus particulièrement sur la figure 5 que, perpendiculairement à l'axe central I-I, les tronçons angulaires 3 et 4 comportent une épaisseur qui décroît depuis les premières extrémités 3a et 4a vers les deuxièmes extrémités libres 3b et 4b. De façon plus précise, les tronçons angulaires 3 et 4 comportent une épaisseur radiale e1 au voisinage de leurs premières extrémités 3a et 4a qui est plus grande que l'épaisseur radiale e2 au voisinage de leurs deuxièmes extrémités libres 3b et 4b. L'épaisseur des tronçons angulaires 3 et 4 diminue progressivement de e1 à e2.

On voit plus particulièrement sur les figures 1 à 3 que le dispositif de butée axiale 1 comprend une empreinte 7 d'entraînement en rotation, permettant d'entraîner en rotation la bague annulaire 2 autour de l'axe central I-I. Cette empreinte 7 est ménagée dans une face 8 d'extrémité proximale 2a de la bague annulaire 2. De façon plus détaillée, l'empreinte 7 comporte deux encoches 9 et 10 diamétralement opposées.

Le dispositif de butée axiale 1 des figures 1 à 5 est destiné à être rapporté dans l'alésage d'une pièce 11 pour y retenir un élément 14.

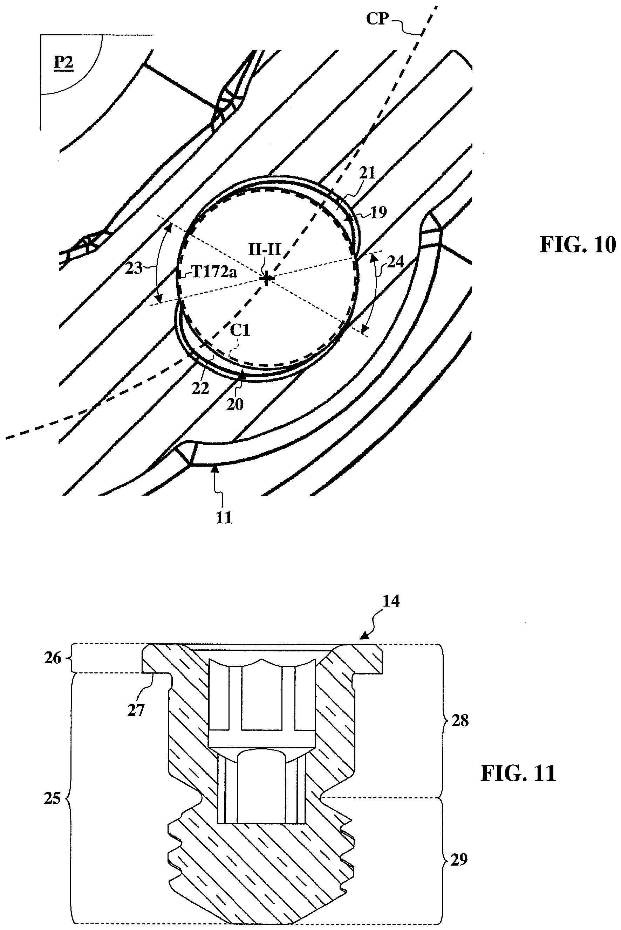

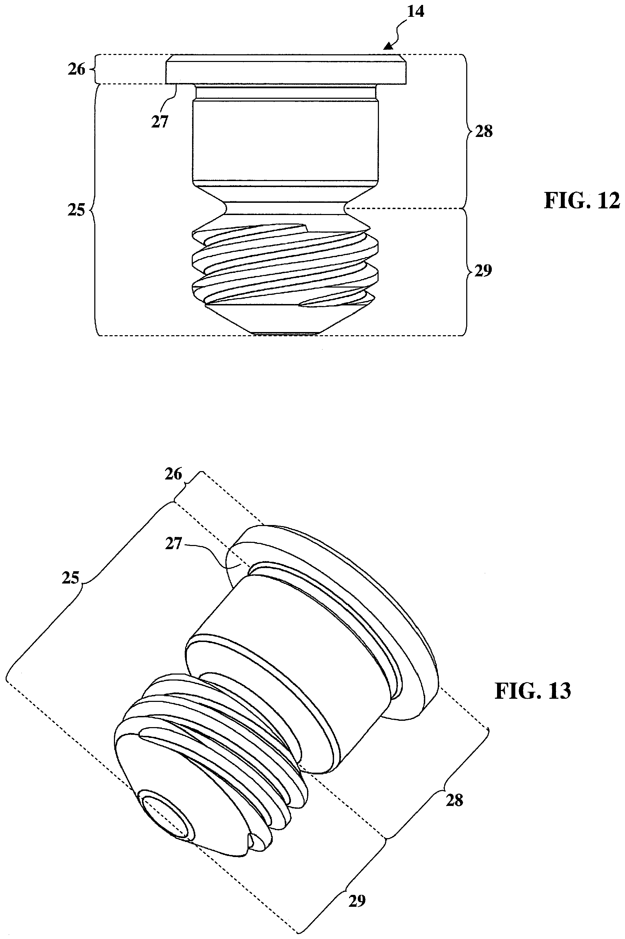

Dans le domaine dentaire, le dispositif de butée axiale 1 est destiné à être rapporté dans un alésage 17 ménagé dans une pièce de type prothèse dentaire 11 telle que la prothèse dentaire plurale transfixée 11 illustrée sur les figures 6 et 7, pour y retenir une vis 14 telle qu'illustrée sur les figures 11 à 13. La prothèse dentaire plurale transfixée 11 s'allonge dans un plan C-C selon un couloir prothétique CP courbe.

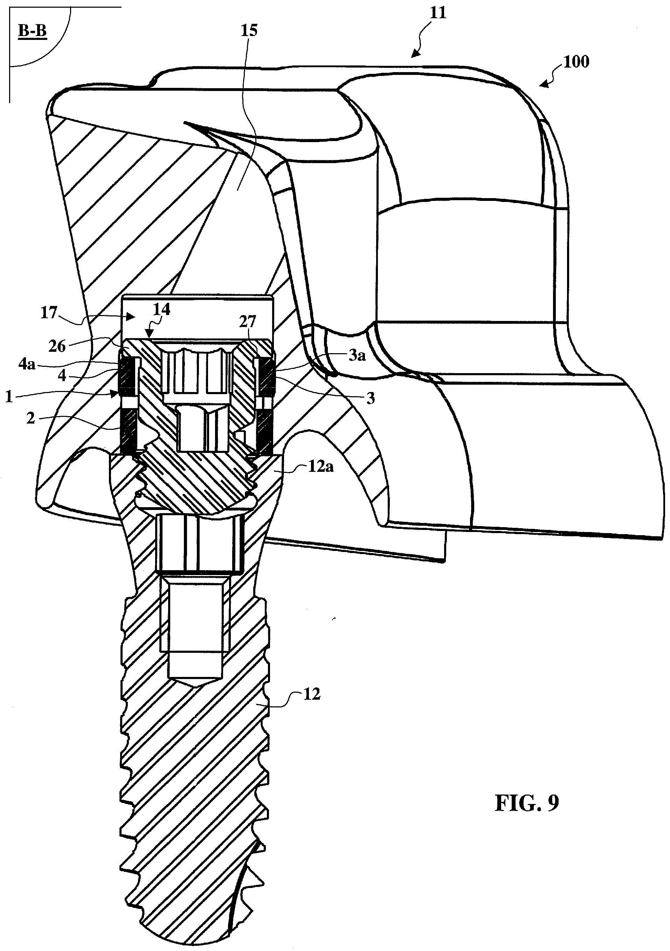

La prothèse dentaire plurale transfixée 11 illustrée sur les figures 6 et 7 est destinée à être rapportée et fixée sur deux implants dentaires 12 et 13 qui sont eux-mêmes destinés à être reçus dans l'os maxillaire ou mandibulaire d'un patient. Pour ce faire, la prothèse dentaire plurale transfixée 11 est fixée sur les implants 12 et 13 par l'intermédiaire de vis 14 telles qu'illustrées sur les figures 11 à 13. Les vis 14 sont accessibles par un outil de vissage à travers des puits d'accès 15 et 16 communiquant avec des alésages ménagés dans la prothèse dentaire plurale transfixée 11. Cela est plus particulièrement rendu visible par les figures 8 et 9 qui sont des vues en coupe réalisées respectivement selon les plans de coupe A-A et B-B illustrés sur la figure 7.

Sur les figures 8 et 9, on voit que la prothèse dentaire plurale transfixée 11 comporte un alésage 17 s'étendant selon un premier axe longitudinal II-II entre une extrémité proximale 17a à orifice d'entrée 18 et une extrémité distale 17b. Le dispositif de butée axiale 1 est reçu dans l'alésage de pièce 17 avec son axe central I-I coaxial au premier axe longitudinal II-II. Le dispositif de butée axiale 1 et la pièce 11, qui est ici de type prothèse dentaire plurale transfixée, forment un ensemble 100.

Ledit alésage de pièce 17 comporte un premier tronçon d'alésage de pièce T171 s'étendant depuis l'orifice d'entrée 18 de l'alésage de pièce 17, un deuxième tronçon d'alésage de pièce T172 faisant suite au premier tronçon d'alésage de pièce T171 et s'étendant vers l'extrémité distale 17b d'alésage de pièce 17. L'alésage de pièce 17 comporte en outre un troisième tronçon d'alésage de pièce T173 faisant suite au deuxième tronçon d'alésage de pièce T172 et s'étendant jusqu'à l'extrémité distale 17b d'alésage de pièce 17.

Le premier tronçon d'alésage de pièce T171 a une section transversale circulaire ayant un diamètre D1 égal ou peu supérieur au diamètre extérieur D2 de la bague annulaire 2.

Le deuxième tronçon d'alésage de pièce T172 comporte deux logements de retenue 19 et 20 qui s'étendent radialement par rapport au premier axe longitudinal II-II hors du volume du cylindre C2 prolongeant la surface cylindrique du premier tronçon d'alésage de pièce T171. Les logements de retenue 19 et 20 sont aptes à recevoir les tronçons angulaires 3 et 4 de dispositif de butée axiale 1 en position de saillie. La forme des logements de retenue 19 et 20 est plus particulièrement visible sur la figure 10 qui est une vue en coupe selon le plan de coupe C-C illustré sur la figure 8.

Sur les figures 8 et 10, on voit que les logements de retenue 19 et 20 comportent des faces proximales de retenue 21 et 22 s'étendant selon un plan transversal P2 sensiblement perpendiculaire au premier axe longitudinal II-II. En d'autres termes, les faces proximales de retenue 21 et 22 s'étendent dans le plan transversal P2 sensiblement parallèle au plan de coupe C-C illustré sur la figure 8. Les faces proximales de retenue 21 et 22 se raccordent à la paroi latérale cylindrique T171a du premier tronçon d'alésage de pièce T171.

Le deuxième tronçon d'alésage de pièce T172 comporte deux portions angulaires 23 et 24 de surface latérale T172a s'étendant dans le prolongement de la surface latérale cylindrique T171a du premier tronçon d'alésage de pièce T171. Les portions angulaires 23 et 24 sont comprises entre les lignes diamétrales en traits discontinus sur la figure 10. Les portions angulaires 23 et 24 séparent les logements de retenue 19 et 20 adjacents.

Les logements de retenue 19 et 20 se développent radialement par rapport au premier axe longitudinal II-II et sensiblement selon le couloir prothétique CP. On dispose ainsi de plus de place radialement pour creuser les logements de retenue 19 et 20 et ainsi augmenter la retenue axiale du dispositif de butée axiale 1.

Un élément destiné à être rapporté dans l'alésage 17 de la pièce (prothèse dentaire plurale transfixée 11) est plus particulièrement illustré sur les figures 11 à 13. Cet élément est une vis 14, de sorte qu'il sera par la suite indifféremment indiqué élément 14 ou vis 14. L'élément 14 comporte :
- un tronçon proximal d'élément 25 ayant une section transversale de dimensions inférieures ou égales au diamètre intérieur D3 de la bague annulaire 2,
- un tronçon distal d'élément 26 à section transversale ayant au moins une dimension supérieure au diamètre intérieur D3 de la bague annulaire 2 mais inférieure ou égale au diamètre D1 du premier tronçon d'alésage de pièce T171,
- un épaulement 27 reliant le tronçon proximal d'élément 25 et le tronçon distal d'élément 26.

Comme déjà explicité, l'élément illustré sur les figures 11 à 13 est une vis 14 dont la tête 28 comprend le tronçon distal d'élément 26 et dont la tige filetée 29 constitue au moins en partie le tronçon proximal d'élément 25.

Comme illustré sur les figures 8 et 9, lorsque le dispositif de butée axiale 1 est engagé dans l'alésage 17 avec ses tronçons angulaires 3 et 4 en prise dans les logements de retenue 19 et 20 (figure 8), le tronçon distal d'élément 26 de la vis 14 repose en appui sur les premières extrémités 3a et 4a des tronçons angulaires 3 et 4 selon l'épaulement 27. L'appui axial de l'épaulement 27 contre les premières extrémités 3a et 4a et l'appui axial des deuxièmes extrémités libres 3b et 4b contre les faces proximales 21 et 22 permettent de retenir la vis 14 axialement dans l'alésage 17 de la pièce constituée ici par la prothèse dentaire plurale transfixée 11.

La vis 14 peut alors être à son tour manipulée, par entraînement en rotation autour de l'axe central I-I au moyen d'un outil de vissage engagé dans le puit d'accès 15, pour fixer la prothèse dentaire plurale transfixée 11 sur l'implant dentaire 12.

Si la vis 14 vient à être endommagée par l'application d'un couple de rotation excessif ou par tout autre moyen, il faut pouvoir extraire celle-ci hors de l'alésage 17.

Pour ce faire, on fait tourner le dispositif de butée axiale 1 autour du premier axe longitudinal II-II (au moyen des encoches 9 et 10) de façon à faire porter les tronçons angulaires 3 et 4 contre les portions angulaires 23 et 24 de surface latérale T172a du deuxième tronçon d'alésage de pièce T172. Les tronçons angulaires 3 et 4 sont ainsi ramenés en position de retrait, pour qu'ils ne dépassent plus radialement dans les logements de retenue 19 et 20. Le dispositif de butée axiale 1 peut alors être extrait hors de l'alésage de pièce 17, à travers le premier tronçon d'alésage de pièce T171, par un simple mouvement de translation axiale selon le premier axe longitudinal II-II et en direction de l'orifice 18 de l'alésage de pièce 17.

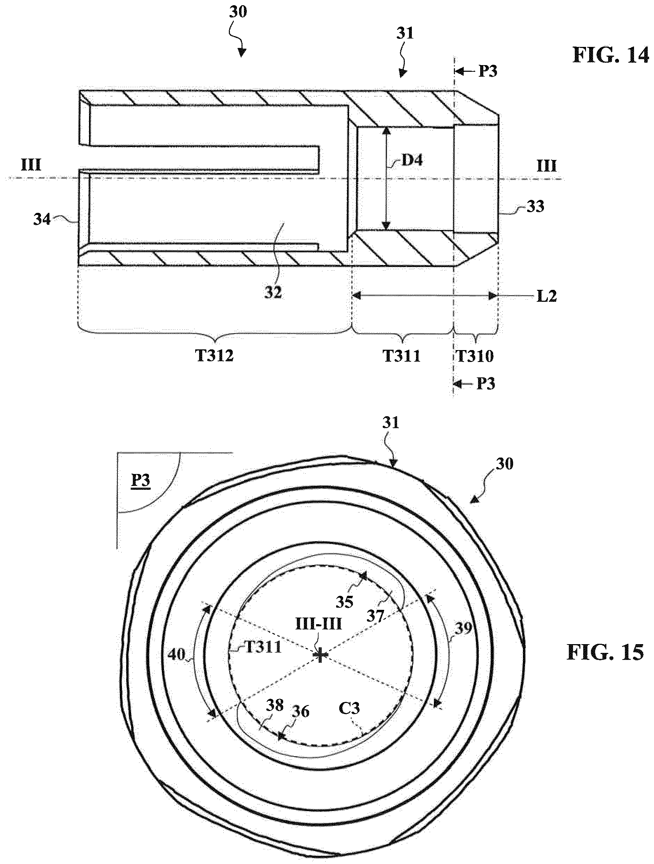

Sur les figures 14 à 17 est illustré un outillage de montage 30 d'un dispositif de butée axiale 1 dans l'alésage 17 de la prothèse dentaire plurale transfixée 11. Comme il est plus particulièrement visible sur les figures 14 et 15, l'outillage de montage 30 comporte un manchon tubulaire 31 à alésage central 32 s'étendant selon un deuxième axe longitudinal III-III entre un orifice distal 33 et un orifice proximal 34. On voit en outre que :
- l'alésage central 32 de manchon tubulaire 31 comporte un tronçon distal d'alésage de manchon tubulaire T310, s'étendant depuis l'orifice distal 33, un tronçon intermédiaire d'alésage de manchon tubulaire T311 faisant suite au tronçon distal d'alésage de manchon tubulaire T310 et s'étendant vers l'orifice proximal 34, et un tronçon proximal d'alésage de manchon tubulaire T312 faisant suite au tronçon intermédiaire d'alésage de manchon tubulaire T311 et s'étendant jusqu'à l'orifice proximal 34,
- le tronçon intermédiaire d'alésage de manchon tubulaire T311 comporte une section transversale circulaire de diamètre D4 égal ou peu supérieur au diamètre extérieur D2 de la bague annulaire 2,
- le tronçon distal d'alésage de manchon tubulaire T310 comporte deux logements de retenue 35 et 36 qui s'étendent radialement par rapport au deuxième axe longitudinal III-III hors du volume du cylindre C3 prolongeant la surface cylindrique du tronçon intermédiaire d'alésage de manchon tubulaire T311, les logements de retenue 35 et 36 étant aptes à recevoir les tronçons angulaires 3 et 4 de dispositif de butée axiale 1 en position de saillie.

Les logements de retenue 35 et 36 comportent chacun une face proximale de retenue 37 ou 38 respective s'étendant selon un plan transversal P3 sensiblement perpendiculaire au deuxième axe longitudinal III-III et se raccordant à la paroi latérale cylindrique du tronçon intermédiaire d'alésage de manchon tubulaire T311.

Le tronçon distal d'alésage de manchon tubulaire T310 comporte deux portions angulaires 39 et 40 de surface latérale s'étendant dans le prolongement de la surface latérale cylindrique du tronçon intermédiaire d'alésage de manchon tubulaire T311. Les portions angulaires 39 et 40 sont comprises entre les lignes diamétrales en traits discontinus sur la figure 15. Chaque logement de retenue 35 et 36 est séparé du logement de retenue adjacent 35 ou 36 par une portion angulaire 39 ou 40.

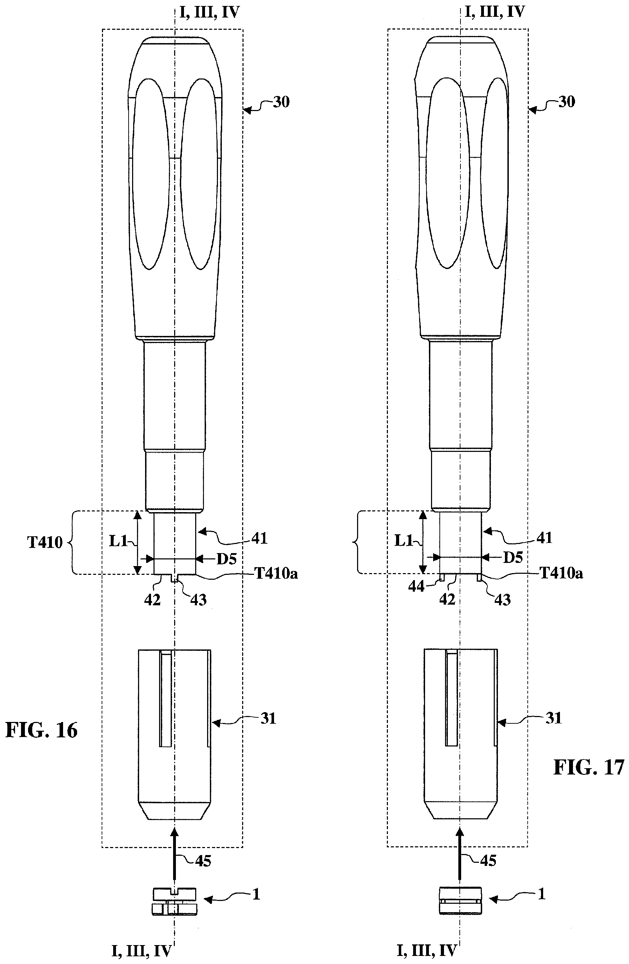

On voit plus particulièrement sur les figures 16 et 17 que l'outillage de montage 30 comporte également un arbre longitudinal 41 s'étendant selon un troisième axe longitudinal IV-IV, à tronçon distal T410 ayant une section transversale extérieure circulaire de diamètre D5 sensiblement égal au diamètre D4 du tronçon intermédiaire d'alésage de manchon tubulaire T311. Le tronçon distal d'arbre longitudinal T410 s'étend selon le troisième axe longitudinal IV-IV selon une longueur L1 supérieure au cumul des longueurs (selon le deuxième axe longitudinal III-III) du tronçon intermédiaire d'alésage de manchon tubulaire T311 et du tronçon distal d'alésage de manchon tubulaire T310. L'engagement du tronçon distal d'arbre longitudinal T410 dans les tronçon intermédiaire d'alésage de manchon tubulaire T311 et tronçon distal d'alésage de manchon tubulaire T310 peut ainsi éjecter hors du manchon tubulaire 31 un dispositif de butée axiale 1 qui serait insérée dans le tronçon distal d'alésage de manchon tubulaire T310.

Pour mettre en rotation le dispositif de butée axiale 1 par rapport au manchon tubulaire 31 autour du deuxième axe longitudinal III-III, on voit que :
- le tronçon distal d'arbre longitudinal T410 comporte, à une extrémité libre T410a, une face distale 42 destinée à venir porter contre l'extrémité proximale 2a de la bague annulaire 2,
- la face distale 42 du tronçon distal d'arbre longitudinal T410 comporte des reliefs, en l'occurrence deux languettes 43 et 44, aptes à coopérer avec l'empreinte 7 ménagée dans la face 8 d'extrémité proximale 2a de la bague annulaire 2 (en pénétrant dans les encoches 9 et 10) pour entraîner en rotation la bague annulaire 2 autour de son axe central I-I par rapport au manchon tubulaire 31. Une utilisation de l'outillage de montage 30 pour insérer et fixer un dispositif de butée axiale 1 dans l'alésage 17 d'une prothèse dentaire plurale transfixée 11 va être explicitée ci-après à l'aide des figures 16 à 21.

Le dispositif de butée axiale 1 est tout d'abord inséré par un mouvement de translation, illustrée par la flèche 45 sur les figures 16 et 17, dans le tronçon distal d'alésage de manchon tubulaire T310. Lors de cette insertion, les tronçons angulaires 3 et 4, en position de saillie, sont reçus dans les logements de retenue 35 et 36 tandis que la bague annulaire 2 est reçue dans le tronçon intermédiaire d'alésage de manchon tubulaire T311.

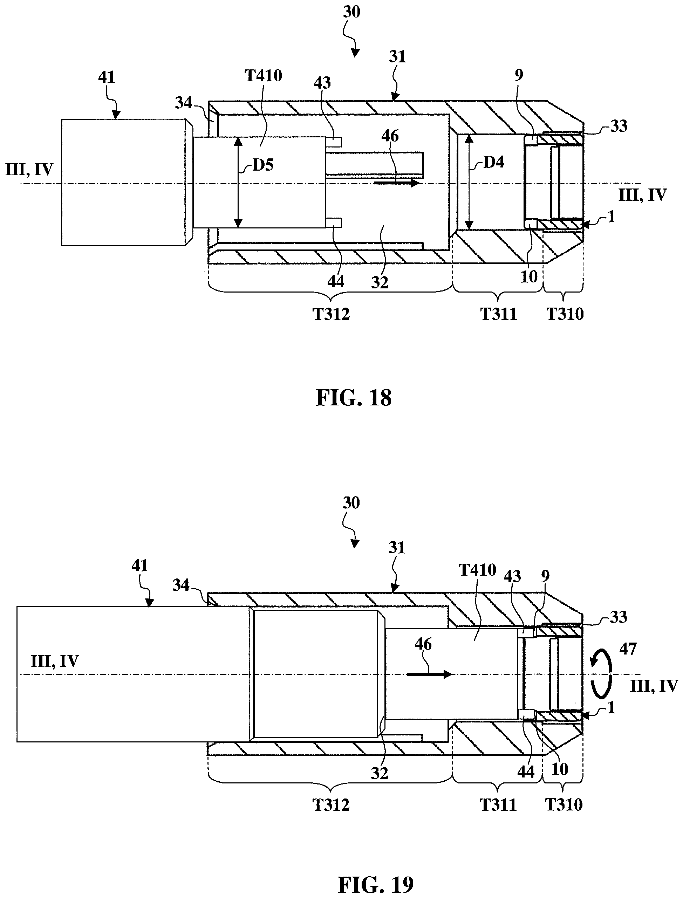

Après cet assemblage du manchon tubulaire 31 et du dispositif de butée axiale 1, l'arbre longitudinal 41 est inséré dans l'alésage central 32 du manchon tubulaire 31 depuis l'orifice proximal 34 vers l'orifice distal 33, selon le mouvement illustré sur les figures 18 et 19 par la flèche 46.

L'arbre longitudinal 41 est inséré dans l'alésage central 32 jusqu'à ce que les languettes 43 et 44 viennent s'engager dans les encoches 9 et 10 comme illustré sur la figure 19.

L'arbre longitudinal 41 est alors mis en rotation par le praticien autour du deuxième axe longitudinal III-III (coïncidant avec l'axe central I-I et le troisième axe longitudinal IV-IV) de façon à amener les tronçons angulaires 3 et 4 en correspondance des portions angulaires 39 et 40 du tronçon distal d'alésage de manchon tubulaire T310 (mouvement illustré par la flèche 47 sur la figure 19). Les tronçons angulaires 3 et 4 sont ainsi ramenés en position de retrait.

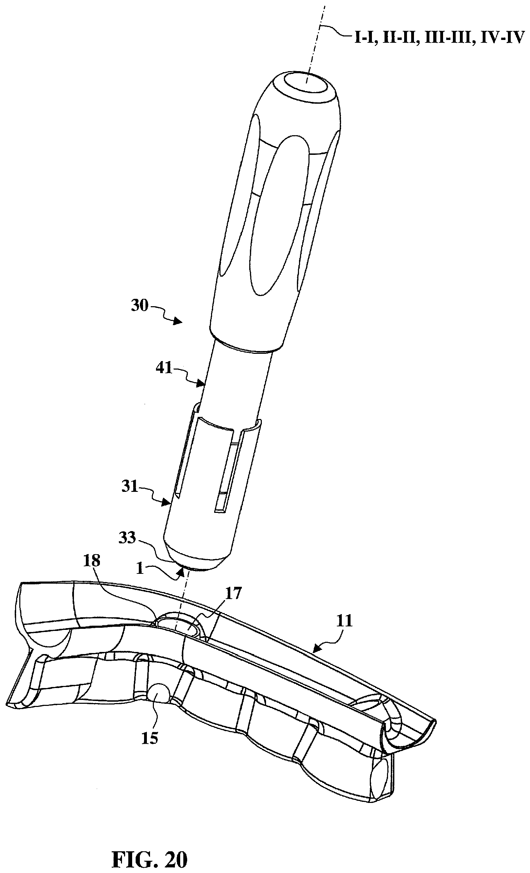

L'ensemble formé par le dispositif de butée axiale 1 (avec ses tronçons angulaires 3 et 4 en position de retrait), le manchon tubulaire 31 et l'arbre longitudinal 41 est ensuite disposé avec l'axe central I-I, le deuxième axe longitudinal III-III et le troisième axe longitudinal IV-IV coïncidant avec le premier axe longitudinal II-II comme illustré sur la figure 20.

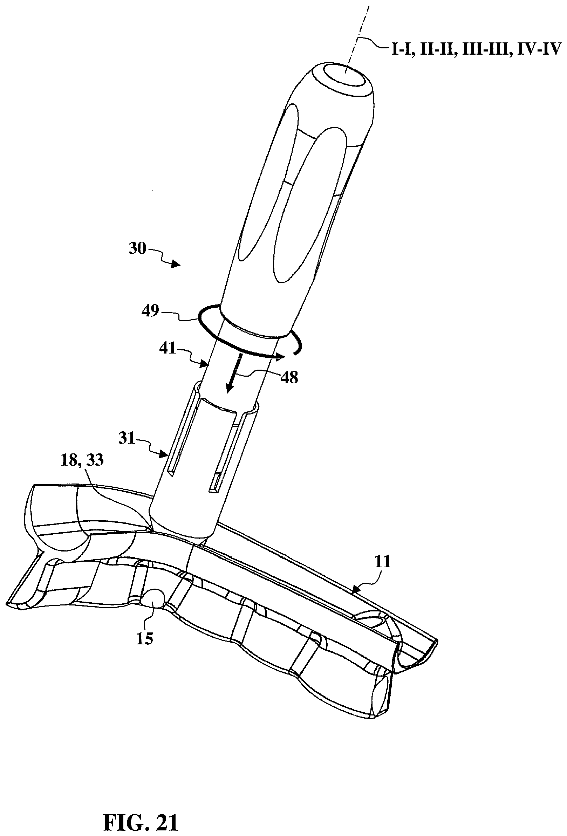

Puis, l'ensemble formé par le dispositif de butée axiale 1, le manchon tubulaire 31 et l'arbre longitudinal 41 est ensuite déplacé jusqu'à ce que l'orifice distal 33 du manchon tubulaire 31 vienne au contact de l'orifice d'entrée 18 de l'alésage de pièce 17 comme illustré sur la figure 21. L'arbre longitudinal 41 est alors déplacé par rapport au manchon tubulaire 31 selon le mouvement de translation axial illustré par la flèche 48. L'arbre longitudinal 41 pousse alors le dispositif de butée axiale 1 (avec ses tronçons angulaires 3 et 4 en position de retrait) à travers le premier tronçon d'alésage de pièce T171 jusqu'à ce que les tronçons angulaires 3 et 4 viennent en correspondance (axialement) du deuxième tronçon d'alésage de pièce T172. A ce moment-là, si les tronçons angulaires 3 et 4 se trouvent également en correspondance (radialement) des logements de retenue 19 et 20, ceux-ci sont élastiquement rappelés en position de saillie et pénètrent radialement dans les logements de retenue 19 et 20. Le dispositif de butée axiale 1 est ainsi dûment installé dans l'alésage 17 comme illustré sur les figures 8 et 9. Dans le cas où les tronçons angulaires 3 et 4 se trouvent en correspondance des portions angulaires 23 et 24 et restent ainsi en position de retrait dans le deuxième tronçon d'alésage de pièce T172, un mouvement de rotation illustré par la flèche 49 peut être appliqué au dispositif de butée axiale 1 par l'arbre longitudinal 41 de façon à amener les tronçons angulaires 3 et 4 en correspondance des logements de retenue 19 et 20 et autoriser le déplacement des tronçons angulaires en position de saillie.

La vis 14 peut être installée dans l'alésage 17 préalablement à l'insertion du dispositif de butée axiale 1 dans l'alésage 17. En alternative, il est également possible, avant que le dispositif de butée axiale 1 ait été inséré dans le tronçon distal d'alésage de manchon tubulaire T310, d'insérer à travers le dispositif de butée axiale 1 la vis 14 jusqu'à ce que l'épaulement 27 vienne en appui sur les tronçons angulaires 3 et 4. C'est alors le sous-ensemble formé par le dispositif de butée axiale 1 et la vis 14 qui est simultanément poussé axialement dans l'alésage 17 lors de la réalisation du mouvement de translation relatif entre le manchon tubulaire 31 et l'arbre longitudinal 41 illustré par la flèche 48 sur la figure 21.

Pour démonter le dispositif de butée axiale 1, celui-ci est mis en rotation autour de l'axe central I-I jusqu'à ce que les tronçons angulaires 3 et 4 soient ramenés en position de retrait par coopération avec les portions angulaires 23 et 24 de l'alésage de pièce 17. Ceci peut être accompli en utilisant l'arbre longitudinal 41 et ses languettes 43 et 44.

Puis le dispositif de butée axiale 1 (et la vis 14) peut être poussé en direction de l'orifice d'entrée 18 hors de l'alésage 17 par un outil de poussée (une tige par exemple) venant en appui contre le dispositif de butée axiale 1 (et/ou la vis 14) en passant à travers le puit d'accès 15.

Dans une première variante illustrée sur la figure 9, l'implant dentaire 12 est en une seule pièce, et son extrémité supérieure 12a est destinée à traverser en partie au moins la muqueuse.

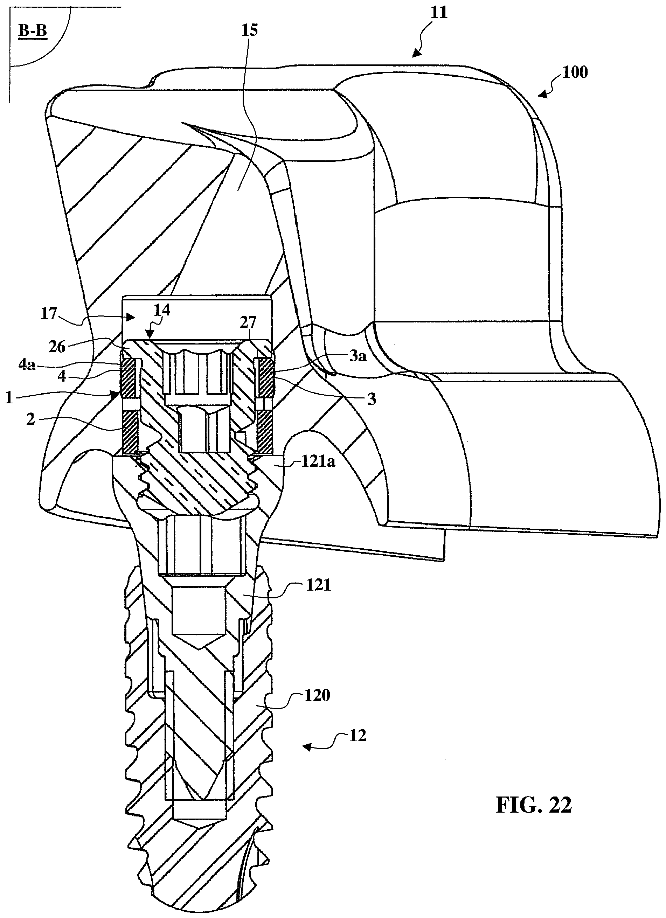

Dans une deuxième variante illustrée sur la figure 22, l'implant dentaire 12 est en deux pièces en étant constitué d'un ancrage osseux 120 et d'un prolongement transmuqueux 121. Le prolongement transmuqueux 121 comporte une extrémité supérieure 121a destinée à traverser en partie au moins la muqueuse.

La présente invention n'est pas limitée aux modes de réalisation qui ont été explicitement décrits, mais elle en inclut les diverses variantes et généralisations contenues dans le domaine des revendications ci-après.

## Revendications

1. Ensemble (100) comportant une pièce (11) et un dispositif de butée axiale (1) destiné à être rapporté dans un alésage (17) de ladite pièce (11) pour y retenir un élément (14), dans lequel :
- le dispositif de butée axiale (1) est monobloc et comprend une bague annulaire (2) à symétrie de révolution autour d'un axe central (I-I), et s'étendant selon l'axe central (I-I) entre une extrémité proximale (2a) et une extrémité distale (2b),
- le dispositif de butée axiale (1) comprend au moins un tronçon angulaire (3, 4) se développant en arc entre une première extrémité (3a, 4a) reliée à l'extrémité distale (2b) de la bague annulaire (2) et une deuxième extrémité libre (3b, 4b),
- le tronçon angulaire (3, 4) est en partie déplaçable radialement à partir de sa première extrémité (3a, 4a) dans un plan transversal (P1) perpendiculaire à l'axe central (I-I) entre une position de retrait et au moins une position de saillie, en étant en permanence élastiquement rappelé en position de saillie,
- en position de retrait, le tronçon angulaire (3, 4) est compris dans le volume d'un cylindre (C1) prolongeant la surface cylindrique extérieure de la bague annulaire (2),
- en position de saillie, l'extrémité libre (3b, 4b) du tronçon angulaire (3, 4) dépasse radialement au-delà du volume du cylindre (C1) prolongeant la surface cylindrique extérieure de la bague annulaire (2),
- ledit alésage de pièce (17) s'étend selon un premier axe longitudinal (II-II) entre une extrémité proximale (17a) à orifice d'entrée (18) et une extrémité distale (17b), et est destiné à recevoir le dispositif de butée axiale (1) orienté avec son axe central (I-I) coaxial au premier axe longitudinal (II-II),
**caractérisé en ce que** :
- ledit alésage de pièce (17) comporte un premier tronçon d'alésage de pièce (T171) s'étendant depuis l'orifice d'entrée (18) de l'alésage de pièce (17), un deuxième tronçon d'alésage de pièce (T172) faisant suite au premier tronçon d'alésage de pièce (T171) et s'étendant vers l'extrémité distale (17b) d'alésage de pièce (17),
- le premier tronçon d'alésage de pièce (T171) a une section transversale circulaire ayant un diamètre (D1) égal ou peu supérieur au diamètre extérieur (D2) de la bague annulaire (2),
- le deuxième tronçon d'alésage de pièce (T172) comporte au moins un logement de retenue (19, 20) qui s'étend radialement par rapport au premier axe longitudinal (II-II) hors du volume du cylindre (C2) prolongeant la surface cylindrique du premier tronçon d'alésage de pièce (T171), ledit logement de retenue (19, 20) étant apte à recevoir ledit au moins un tronçon angulaire (3, 4) de dispositif de butée axiale (1) en position de saillie,
- le logement de retenue (19, 20) comporte une face proximale de retenue (21, 22) s'étendant selon un plan transversal (P2) sensiblement perpendiculaire au premier axe longitudinal (II-II) et se raccordant à la paroi latérale cylindrique (T171a) du premier tronçon d'alésage de pièce (T171),
- le deuxième tronçon d'alésage de pièce (T172) comporte au moins une portion angulaire (23, 24) de surface latérale (T172a) s'étendant dans le prolongement de la surface latérale cylindrique (T171a) du premier tronçon d'alésage de pièce (T171).

2. Ensemble (100) selon la revendication 1, **caractérisé en ce que** ledit au moins un tronçon angulaire (3, 4) est tenu à l'écart de l'extrémité distale (2b) de la bague annulaire (2), selon l'axe central (I-I), par une entretoise (5, 6) s'étendant parallèlement à l'axe central (I-I).

3. Ensemble (100) selon l'une des revendications 1 ou 2, **caractérisé en ce que**, perpendiculairement à l'axe central (I-I), ledit au moins un tronçon angulaire (3, 4) comporte une épaisseur (e1, e2) qui décroît depuis sa première extrémité (3a, 4a) vers sa deuxième extrémité libre (3b, 4b).

4. Ensemble (100) selon l'une quelconque des revendications 1 à 3, **caractérisé en ce qu'**une empreinte (7), permettant d'entraîner en rotation la bague annulaire (2) autour de l'axe central (I-I), est ménagée dans une face (8) d'extrémité proximale (2a) de la bague annulaire (2).

5. Ensemble (100) selon la revendication 4, **caractérisé en ce que** l'empreinte (7) comporte deux encoches (9, 10) diamétralement opposées.

6. Ensemble (100) selon l'une quelconque des revendications 1 à 5, **caractérisé en ce que** le dispositif de butée axiale (1) comporte deux tronçons angulaires (3, 4) déplaçables dans un même plan transversal (P1).

7. Ensemble (100) selon l'une quelconque des revendications 1 à 6, **caractérisé en ce que** :
- le deuxième tronçon d'alésage de pièce (T172) comporte une pluralité de logements de retenue (19, 20),
- chaque logement de retenue (19, 20) est séparé du logement de retenue (19, 20) adjacent par une portion angulaire (23, 24) de la surface latérale (T172a) de deuxième tronçon d'alésage de pièce (T172) qui s'étend dans le prolongement de la surface latérale cylindrique (T171a) du premier tronçon d'alésage de pièce (T171).

8. Ensemble (100) selon l'une quelconque des revendications 1 à 7, **caractérisé en ce que** la pièce (11) est une prothèse dentaire plurale transfixée.

9. Ensemble (100) selon la revendication 8, **caractérisée en ce que** :
- la prothèse dentaire plurale transfixée (11) s'allonge selon un couloir prothétique (CP),
- ledit au moins un logement de retenue (19, 20) s'étend radialement par rapport au premier axe longitudinal (II-II) et sensiblement selon le couloir prothétique (CP).

10. Ensemble (100) selon l'une quelconque des revendications 1 à 9, **caractérisé en ce qu'**il comporte en outre un élément (14) destiné à être rapporté dans l'alésage (17) de la pièce (11), ledit élément (14) comportant :
- un tronçon proximal d'élément (25) ayant une section transversale de dimensions inférieures ou égales au diamètre intérieur (D3) de la bague annulaire (2),
- un tronçon distal d'élément (26) à section transversale ayant au moins une dimension supérieure au diamètre intérieur (D3) de la bague annulaire (2) mais inférieure ou égale au diamètre (D1) du premier tronçon d'alésage de pièce (T171),
- un épaulement (27) reliant les tronçons proximal (25) et distal (26) d'élément.

11. Ensemble (100) selon la revendication 10, **caractérisé en ce que** l'élément (14) est une vis dont la tête (28) comprend le tronçon distal d'élément (26) et dont la tige filetée (29) constitue au moins en partie le tronçon proximal d'élément (25).

12. Outillage de montage (30) du dispositif de butée axiale (1) dans l'alésage (17) d'une pièce (11) de l'ensemble (100) selon l'une quelconque des revendications 1 à 9, **caractérisé en ce que** :
- il comporte un manchon tubulaire (31) à alésage central (32) s'étendant selon un deuxième axe longitudinal (III-III) entre un orifice distal (33) et un orifice proximal (34),
- l'alésage central (32) de manchon tubulaire (31) comporte un tronçon distal d'alésage de manchon tubulaire (T310), s'étendant depuis l'orifice distal (33), un tronçon intermédiaire d'alésage de manchon tubulaire (T311) faisant suite au tronçon distal d'alésage de manchon tubulaire (T310) et s'étendant vers l'orifice proximal (34), et un tronçon proximal d'alésage de manchon tubulaire (T312) faisant suite au tronçon intermédiaire d'alésage de manchon tubulaire (T311) et s'étendant jusqu'à l'orifice proximal (34),
- le tronçon intermédiaire d'alésage de manchon tubulaire (T311) comporte une section transversale circulaire de diamètre (D4) égal ou peu supérieur au diamètre extérieur (D2) de la bague annulaire (2),
- le tronçon distal d'alésage de manchon tubulaire (T310) comporte au moins un logement de retenue (35, 36) qui s'étend radialement par rapport au deuxième axe longitudinal (III-III) hors du volume du cylindre (C3) prolongeant la surface cylindrique du tronçon intermédiaire d'alésage de manchon tubulaire (T311), ledit logement de retenue (35, 36) étant apte à recevoir ledit au moins un tronçon angulaire (3, 4) de dispositif de butée axiale (1) en position de saillie,
- le logement de retenue (35, 36) comporte une face proximale de retenue (37, 38) s'étendant selon un plan transversal (P3) sensiblement perpendiculaire au deuxième axe longitudinal (III-III) et se raccordant à la paroi latérale cylindrique du tronçon intermédiaire d'alésage de manchon tubulaire (T311),
- le tronçon distal d'alésage de manchon tubulaire (T310) comporte au moins une portion angulaire (39, 40) de surface latérale s'étendant dans le prolongement de la surface latérale cylindrique du tronçon intermédiaire d'alésage de manchon tubulaire (T311).

13. Outillage de montage (30) selon la revendication 12, **caractérisé en ce que** :
- le tronçon distal d'alésage de manchon tubulaire (T310) comporte une pluralité de logements de retenue (35, 36),
- chaque logement de retenue (35, 36) est séparé du logement de retenue (35, 36) adjacent par une portion angulaire (39, 40) de la surface latérale de tronçon distal d'alésage de manchon tubulaire (T310) qui s'étend dans le prolongement de la surface latérale cylindrique du tronçon intermédiaire d'alésage de manchon tubulaire (T311).

14. Outillage de montage (30) selon l'une des revendications 12 ou 13, **caractérisé en ce que** :
- il comporte un arbre longitudinal (41) s'étendant selon un troisième axe longitudinal (IV-IV), à tronçon distal (T410) ayant une section transversale extérieure circulaire de diamètre (D5) sensiblement égal au diamètre (D4) du tronçon intermédiaire d'alésage de manchon tubulaire (T311),
- le tronçon distal d'arbre longitudinal (T410) s'étend selon le troisième axe longitudinal (IV-IV) selon une longueur (L1) supérieure au cumul des longueurs des tronçon intermédiaire d'alésage de manchon tubulaire (T311) et tronçon distal d'alésage de manchon tubulaire (T310) selon le deuxième axe longitudinal (III-III),
- le tronçon distal d'arbre longitudinal (T410) comporte, à une extrémité libre, une face distale (42) destinée à venir porter contre l'extrémité proximale (2a) de la bague annulaire (2),
- la face distale (42) du tronçon distal d'arbre longitudinal (T410) comporte des reliefs (43, 44) aptes à coopérer avec l'empreinte (7) ménagée dans la face (8) d'extrémité proximale (2a) de la bague annulaire (2) pour entraîner en rotation la bague annulaire (2) autour de son axe central (I-I).

## Patentansprüche

1. Aufbau (100) umfassend eine Komponente (11) und eine axiale Begrenzungsstopvorrichtung (1) zur Platzierung in einer Bohrung (17) der besagten Komponente (11), um ein Element (14) darin zurückzuhalten, in dem:
- die axiale Begrenzungsstopvorrichtung (1) einstückig ist und eine ringförmige Buchse (2) umfasst, welche eine Drehsymmetrie um eine zentrale Achse (I-I) besitzt und welche sich entlang der zentralen Achse (I-I) zwischen einem proximalen Ende (2a) und einem distalen Ende (2b) erstreckt,
- die axiale Begrenzungsstopvorrichtung (1) wenigstens einen Winkelbereich (3, 4) umfasst, der sich ein einem Winkel zwischen einem mit dem distalen Ende (2b) verbundenen ersten Ende (3a, 4a) der ringförmigen Buchse (2) und einem zweiten, freien Ende (3b, 4b) erstreckt,
- der Winkelbereich (3, 4) teilweise radial von seinem ersten Ende (3a, 4a) in einer Querebene (P1) rechtwinklig zur zentralen Achse (I-I) zwischen einer eingezogenen Position und wenigstens einer vorspringenden Position beweglich ist, der permanent elastisch in die vorspringende Position zurückgestellt ist,
- in der eingezogenen Position der Winkelbereich (3, 4) im Volumen eines Zylinders (Cl), welcher die äußere Zylinderoberfläche der ringförmigen Buchse (2) weiterführt, enthalten ist,
- in der vorspringenden Position sich das freie Ende (3b, 4b) des Winkelbereichs (3, 4) radial hinter das Volumen des die äußere Zylinderoberfläche der ringförmigen Buchse (2) weiterführenden Zylinders (C1) erstreckt,
- die genannte Komponentenbohrung (17) sich entlang einer ersten Längsachse (II-II) zwischen einem proximalen Ende (17a) mit einer Einlassöffnung (18) und einem distalen Ende (17b) erstreckt und vorgesehen ist, die axiale Begrenzungsstopvorrichtung (1), welche mit ihrer zentralen Achse (I-I) koaxial zur ersten Längsachse (II-II) orientiert ist, aufzunehmen, **dadurch gekennzeichnet, dass**:
- die genannte Komponentenbohrung (17) einen sich von der Einlassöffnung (18) der Komponentenbohrung (17) erstreckenden ersten omponentenbohrungsbereich (T171), einen sich an den ersten Komponentenbohrungsbereich (T171) anschließenden und sich bis zum distalen Ende (17b) der Komponentenbohrung (17) erstreckenden zweiten Komponentenbohrungsbereich (T172) umfasst,
- der ersten Komponentenbohrungsbereich (T171) einen kreisförmigen Querschnitt mit einem Durchmesser (D1) gleich oder leicht größer als der Außendurchmesser (D2) der ringförmigen Buchse (2) besitzt,
- der zweite Komponentenbohrungsbereich (T172) wenigstens einen Rückhaltesitz (19, 20) besitzt, welcher sich bezüglich der ersten Längsachse (II-II) radial aus dem Volumen des die äußere Zylinderoberfläche des ersten Komponentenbohrungsbereichs (T171) weiterführenden Zylinders (C2) erstreckt, wobei der besagte Rückhaltesitz (19, 20) in der Lage ist, den besagten wenigstens einen Winkelbereich (3, 4) der axialen Begrenzungsstopvorrichtung (1) in der vorspringenden Position aufzunehmen,
- der Rückhaltesitz (19, 20) eine proximale Rückhaltefläche (21, 22) besitzt, die sich entlang einer im Wesentlichen zur ersten Längsachse (II-II) rechtwinkligen Querebene (P2) erstreckt und an die zylindrische Seitenwand (T171a) des ersten Komponentenbohrungsbereichs (T171) anbindet,
- der zweite Komponentenbohrungsbereich (T172) wenigstens ein Winkelteil (23, 24) einer Seitenoberfläche (T172a) besitzt, die sich in Weiterbildung der zylindrischen Seitenwand (T171a) des ersten Komponentenbohrungsbereichs (T171) erstreckt.

2. Aufbau (100) nach Anspruch 1, **dadurch gekennzeichnet, dass** der genannte wenigstens eine Winkelbereich (3, 4) vom distalen Ende (2b) der ringförmigen Buchse (2) entlang der zentralen Achse (I-I) mittels eines sich parallel zur zentralen Achse (I-I) erstreckenden Abstandshalters (5, 6) entfernt gehalten wird.

3. Aufbau (100) nach einem der Ansprüche 1 oder 2, **dadurch gekennzeichnet, dass** rechtwinklig zur zentralen Achse (I-I) der genannte Winkelbereich (3, 4) eine Dicke (e1, e2) besitzt, die von seinem ersten Ende (3a, 4a) hin zu seinem zweiten freien Ende (3b, 4b) abnimmt.

4. Aufbau (100) nach irgendeinem der Ansprüche 1 bis 3, **dadurch gekennzeichnet, dass** eine Vertiefung (7), welche es der ringförmigen Buchse (2) ermöglicht um die zentrale Achse (I-I) zur Drehung angetrieben zu werden, in einer Fläche (8) des proximalen Endes (2a) der ringförmigen Buchse (2) eingeformt ist.

5. Aufbau (100) nach Anspruch 4, **dadurch gekennzeichnet dass** die Vertiefung (7) zwei diametrisch gegenüberliegende Kerben (9, 10) besitzt.

6. Aufbau (100) nach irgendeinem der Ansprüche 1 bis 5, **dadurch gekennzeichnet, dass** die axiale Begrenzungsstopvorrichtung (1) zwei Winkelbereiche (3, 4) besitzt, die in der selben Querebene (P1) beweglich sind.

7. Aufbau (100) nach irgendeinem der Ansprüche 1 bis 6, **dadurch gekennzeichnet, dass**:
- der zweite Komponentenbohrungsbereich (T172) eine Vielzahl vom Rückhaltesitzen (19, 20) besitzt,
- jeder Rückhaltesitz (19, 20) vom benachbarten Rückhaltesitz (19, 20) durch einen Winkelbereich (23, 24) der Seitenoberfläche (T172a) des zweiten Komponentenbohrungsbereichs (T172), der sich in der Weiterbildung der zylindrischen Seitenoberfläche (T171a) des ersten Komponentenbohrungsbereichs (T171) erstreckt, getrennt ist.

8. Aufbau (100) nach irgendeinem der Ansprüche 1 bis 7, **dadurch gekennzeichnet, dass** die Komponente (11) eine vielfach transfixierte Dentalprothese ist.

9. Aufbau (100) nach Anspruch 8, **dadurch gekennzeichnet, dass**:
- vielfach transfixierte Dentalprothese (11) sich entlang eines prothetischen Korridors erstreckt (CP),
- der besagte wenigstens eine Rückhaltesitz (19, 20) sich radial bezüglich der ersten Längsachse (II-II) und im Wesentlichen entlang des prothetischen Korridors (CP) erstreckt.

10. Aufbau (100) nach irgendeinem der Ansprüche 1 bis 9, **dadurch gekennzeichnet, dass** er ferner ein Element (14) zum anordnen in der Bohrung (17) der Komponente (11) umfasst, wobei das genannte Element (14) umfasst:
- einen proximalen Bereich (25), der einen Querschnitt mit einer Abmessung kleiner oder gleich dem Innendurchmesser (D3) der ringförmigen Buchse (2) aufweist,
- einen distalen Bereich (26) mit einem Querschnitt, der wenigstens eine Abmessung größer al der Innendurchmesser (D3) der ringförmigen Buchse (2) aber kleiner oder gleich dem Durchmesser (D1) des ersten Komponentenbohrungsbereichs (T171) aufweist,
- eine Schulter (27), die den proximalen Bereich (25) und den distalen Bereich (26) des Elementes miteinander verbindet.

11. Aufbau (100) nach Anspruch 10, **dadurch gekennzeichnet, dass** das Element (14) eine Schraube ist, die einem Kopf (28) aufweist, der den distalen Bereich (26) des Elementes und einen Gewindeschaft (29) umfasst, der wenigstens zum Teil den proximalen Bereich (25) des Elementes bildet.

12. Montagewerkzeug (30) zum Montieren der axialen Begrenzungsstopvorrichtung (1) in der Bohrung (17) einer Komponente (11) des Aufbaus (100) nach einem der Ansprüche 1 bis 9, **dadurch gekennzeichnet, dass**:
- es eine Rohrschelle (31) mit einer zentralen Bohrung (31) aufweist, die sich entlang einer zweiten Längsachse (III-III) zwischen einer distalen Öffnung (32) und einer proximale Öffnung (34) erstreckt,
- die zentrale Bohrung (32) der Rohrschelle (31) einen Rohrschellendistalbohrungsbereich (T310), der sich von der distalen Bohrung (33) erstreckt, einen Rohrschellenmittelbohrungsbereich (T311), der auf den Rohrschellendistalbohrungsbereich (T310) folgt und sich zur proximalen Öffnung (34) erstreckt und einen Rohrschellenproximalbohrungsbereich (T312), der auf den Rohrschellenmittelbohrungsbereich (T311) folgt und sich soweit wie die proximale Öffnung (34) erstreckt, aufweist,
- der Rohrschellenmittelbohrungsbereich (T311) einen kreisförmigen Querschnitt mit einem Durchmesser (D4) aufweist, der gleich oder leicht größer ist, als der Außendurchmesser (D2) der kreisförmigen Buchse (2),
- der Rohrschellendistalbohrungsbereich (T310) wenigstens einen Rückhaltesitz (35, 36) besitzt, der sich bezüglich der zweiten Längsachse (III-III) radial aus dem Volumen des Zylinders (C3) erstreckt, der die zylindrische Oberfläche des Rohrschellenmittelbohrungsbereichs (T311) fortbildet, wobei der besagte Rückhaltesitz (35, 36) in der Lage ist, den besagten wenigstens einen Winkelbereich (3, 4) der axialen Begrenzungsstopvorrichtung (1) in der vorspringenden Position aufzunehmen,
- der Rückhaltesitz (35, 36) eine proximale Rückhaltefläche (37, 38) besitzt, die sich entlang einer im wesentlichen zur zweiten Längsachse (III-III) rechtwinkligen Querebene (P3) erstreckt und die zylindrische Seitenwand des Rohrschellenmittelbohrungsbereichs (T311) anbindet,
- der Rohrschellendistalbohrungsbereich (T310) wenigstens einen Winkelbereich (39, 40) mit einer Seitenfläche aufweist, die sich in Weiterbildung zur zylindrischen Seitenfläche des Rohrschellenmittelbohrungsbereichs (T311) erstreckt.

13. Montagewerkzeug (30) nach Anspruch 12, **dadurch gekennzeichnet, dass**:
- der Rohrschellendistalbohrungsbereich (T310) eine Vielzahl von Rückhaltesitzen (35, 36) aufweist,
- jeder Rückhaltesitz (35, 36) vom benachbarten Rückhaltesitz (35, 36) durch ein Winkelteil (39, 40) der Seitenfläche des Rohrschellendistalbohrungsbereichs (T310), die sich in Weiterbildung zur zylindrischen Seitenfläche des Rohrschellenmittelbohrungsbereichs (T311) erstreckt, getrennt ist.

14. Montagewerkzeug (30) nach einem der Ansprüche 12 oder 13, **dadurch gekennzeichnet, dass**:
- es einen sich entlang einer dritten Längsachse (IV-IV) erstreckenden Längsstab (41) mit einem distalen Bereich (T410), der einen äußeren kreisförmigen Querschnitt mit einem im Wesentlichen dem Durchmesser (D4) des Rohrschellenmittelbohrungsbereichs (T311) gleichen Durchmesser (D5) aufweist, besitzt,
- der distale Bereich (T410) des Längsstabes sich entlang der dritten Achse (IV-IV) mit einer Länge (L1) größer als die Summe aus den Längen des Rohrschellenmittelbohrungsbereichs (T311) und des Rohrschellendistalbohrungsbereichs (T310) entlang der zweiten Längsachse (III-III) erstreckt,
- der distale Bereich (T410) des Längsstabes an seinem freien Ende eine distale Fläche (42) aufweist, die dazu vorgesehen ist, gegen das proximale Ende (2a) der ringförmigen Buchse (2) gestützt zu werden,
- die distale Fläche (42) des distalen Bereichs (T410) des Längsschaftes erhöhte Bereiche (43, 44) aufweist, die in der Lage sind mit der Vertiefung (7) an der Fläche (8) des proximalen Endes (2a) der ringförmigen Buchse (2) zusammenzuwirken, um die ringförmige Buchse (2) zur Drehung um ihre zentrale Achse (I-I) anzutreiben.

## Claims

1. Assembly (100) comprising a component (11) and an axial limit stop device (1) intended to be placed in a bore (17) of said component (11) in order to retain an element (14) therein, in which:
- the axial limit stop device (1) is in one piece and comprises an annular ring (2) which has symmetry of revolution about a central axis (I-I) and which extends along the central axis (I-I) between a proximal end (2a) and a distal end (2b),
- the axial limit stop device (1) comprises at least one angular portion (3, 4) developing in an arc between a first end (3a, 4a), joined to the distal end (2b) of the annular ring (2), and a second, free end (3b, 4b),
- the angular portion (3, 4) is in part movable radially from its first end (3a, 4a), in a transverse plane (P1) perpendicular to the central axis (I-I), between a retracted position and at least one protruding position, being elastically returned permanently to the protruding position,
- in the retracted position, the angular portion (3, 4) is included within the volume of a cylinder (C1) continuing the outer cylindrical surface of the annular ring (2),
- in the protruding position, the free end (3b, 4b) of the angular portion (3, 4) extends radially beyond the volume of the cylinder (C1) continuing the outer cylindrical surface of the annular ring (2),
- said component bore (17) extends along a first longitudinal axis (II-II) between a proximal end (17a), with inlet orifice (18), and a distal end (17b) and is intended to receive the axial limit stop device (1) oriented with its central axis (I-I) coaxial to the first longitudinal axis (II-II),
**characterized in that**:
- said component bore (17) comprises a first component bore portion (T171) extending from the inlet orifice (18) of the component bore (17), a second component bore portion (T172) following on from the first component bore portion (T171) and extending toward the distal end (17b) of the component bore (17),
- the first component bore portion (T171) has a circular cross section with a diameter (D1) equal to or slightly greater than the external diameter (D2) of the annular ring (2),
- the second component bore portion (T172) has at least one retaining seat (19, 20) which extends radially with respect to the first longitudinal axis (II-II) out from the volume of the cylinder (C2) continuing the cylindrical surface of the first component bore portion (T171), said retaining seat (19, 20) being able to receive said at least one angular portion (3, 4) of the axial limit stop device (1) in the protruding position,
- the retaining seat (19, 20) has a proximal retaining face (21, 22) extending along a transverse plane (P2) substantially perpendicular to the first longitudinal axis (II-II) and connecting to the cylindrical lateral wall (T171a) of the first component bore portion (T171),
- the second component bore portion (T172) has at least one angular part (23, 24) of lateral surface (T172a) extending in the continuation of the cylindrical lateral surface (T171a) of the first component bore portion (T171).

2. Assembly (100) according to claim 1, **characterized in that** said at least one angular portion (3, 4) is kept apart from the distal end (2b) of the annular ring (2), along the central axis (I-I), by a spacer (5, 6) extending parallel to the central axis (I-I) .

3. Assembly (100) according to either of claims 1 and 2, **characterized in that**, perpendicular to the central axis (I-I), said at least one angular portion (3, 4) has a thickness (e1, e2) that decreases from its first end (3a, 4a) toward its second, free end (3b, 4b).

4. Assembly (100) according to any one of claims 1 to 3, **characterized in that** an indentation (7), allowing the annular ring (2) to be driven in rotation about the central axis (I-I), is formed in a face (8) of the proximal end (2a) of the annular ring (2).

5. Assembly (100) according to claim 4, **characterized in that** the indentation (7) has two diametrically opposite notches (9, 10).

6. Assembly (100) according to any one of claims 1 to 5, **characterized in that** the axial limit stop device (1) has two angular portions (3, 4) movable in the same transverse plane (P1).

7. Assembly (100) according to any one of claims 1 to 6, **characterized in that**:
- the second component bore portion (T172) has a plurality of retaining seats (19, 20),
- each retaining seat (19, 20) is separated from the adjacent retaining seat (19, 20) by an angular part (23, 24) of the lateral surface (T172a) of the second component bore portion (T172) which extends in the continuation of the cylindrical lateral surface (T171a) of the first component bore portion (T171).

8. Assembly (100) according to any one of claims 1 to 7, **characterized in that** the component (11) is a transfixed multiple dental prosthesis.

9. Assembly (100) according to claim 8, **characterized in that**:
- the transfixed multiple dental prosthesis (11) extends along a prosthetic corridor (CP),
- said at least one retaining seat (19, 20) extends radially with respect to the first longitudinal axis (II-II) and substantially along the prosthetic corridor (CP) .

10. Assembly (100) according to any one of claims 1 to 9, **characterized in that** it further comprises an element (14) intended to be placed in the bore (17) of the component (11), said element (14) comprising :
- a proximal portion (25) having a cross section with dimensions less than or equal to the internal diameter (D3) of the annular ring (2),
- a distal portion (26) with a cross section having at least one dimension greater than the internal diameter (D3) of the annular ring (2) but less than or equal to the diameter (D1) of the first component bore portion (T171),
- a shoulder (27) connecting the proximal portion (25) and distal portion (26) of the element.

11. Assembly (100) according to claim 10, **characterized in that** the element (14) is a screw, of which the head (28) comprises the distal portion (26) of the element, and of which the threaded shank (29) constitutes at least in part the proximal portion (25) of the element.

12. Mounting tool (30) for mounting the axial limit stop device (1) in the bore (17) of a component (11) of the assembly (100) according to any one of claims 1 to 9, **characterized in that**:
- it has a tubular sleeve (31) with a central bore (32) extending along a second longitudinal axis (III-III) between a distal orifice (33) and a proximal orifice (34),
- the central bore (32) of the tubular sleeve (31) has a tubular sleeve distal bore portion (T310), extending from the distal orifice (33), a tubular sleeve intermediate bore portion (T311), following on from the tubular sleeve distal bore portion (T310) and extending toward the proximal orifice (34), and a tubular sleeve proximal bore portion (T312) following on from the tubular sleeve intermediate bore portion (T311) and extending as far as the proximal orifice (34),
- the tubular sleeve intermediate bore portion (T311) has a circular cross section with a diameter (D4) equal to or slightly greater than the external diameter (D2) of the annular ring (2),
- the tubular sleeve distal bore portion (T310) has at least one retaining seat (35, 36) which extends radially with respect to the second longitudinal axis (III-III) out from the volume of the cylinder (C3) continuing the cylindrical surface of the tubular sleeve intermediate bore portion (T311), said retaining seat (35, 36) being able to receive said at least one angular portion (3, 4) of the axial limit stop device (1) in the protruding position,
- the retaining seat (35, 36) has a proximal retaining face (37, 38) extending along a transverse plane (P3) substantially perpendicular to the second longitudinal axis (III-III) and connecting to the cylindrical lateral wall of the tubular sleeve intermediate bore portion (T311),
- the tubular sleeve distal bore portion (T310) has at least one angular part (39, 40) with a lateral surface extending in the continuation of the cylindrical lateral surface of the tubular sleeve intermediate bore portion (T311).

13. Mounting tool (30) according to claim 12, **characterized in that**:
- the tubular sleeve distal bore portion (T310) has a plurality of retaining seats (35, 36),
- each retaining seat (35, 36) is separated from the adjacent retaining seat (35, 36) by an angular part (39, 40) of the lateral surface of the tubular sleeve distal bore portion (T310) which extends in the continuation of the cylindrical lateral surface of the tubular sleeve intermediate bore portion (T311).

14. Mounting tool (30) according to either of claims 12 and 13, **characterized in that**:
- it has a longitudinal shaft (41) extending along a third longitudinal axis (IV-IV), with a distal portion (T410) having an outer circular cross section of diameter (D5) substantially equal to the diameter (D4) of the tubular sleeve intermediate bore portion (T311),
- the distal portion (T410) of the longitudinal shaft extends along the third longitudinal axis (IV-IV) by a length (L1) greater than the sum of the lengths of the tubular sleeve intermediate bore portion (T311) and tubular sleeve distal bore portion (T310) along the second longitudinal axis (III-III),
- the distal portion (T410) of the longitudinal shaft has, at a free end, a distal face (42) intended to bear against the proximal end (2a) of the annular ring (2),
- the distal face (42) of the distal portion (T410) of the longitudinal shaft has raised areas (43, 44) able to cooperate with the indentation (7) formed in the face (8) of the proximal end (2a) of the annular ring (2) in order to drive the annular ring (2) in rotation about its central axis (I-I).
